# EUROPÄISCHE PATENTANMELDUNG

(11) **EP 1 972 482 A2**
(43) Veröffentlichungstag der Anmeldung: **24.09.2008**
(21) Anmeldenummer: 08005227.7
(22) Anmeldetag: 19.03.2008
(51) Int. Cl.: B60K 7/00, B62D 5/04

(54) **Lenkantriebssystem**

(30) Priorität: 20.03.2007 DE 102007013172
(71) Anmelder: Gebr. Frei GmbH & Co. KG, 72461 Albstadt-Onstmettingen (DE)
(72) Erfinder: Schwarz, Achim, 72474 Winterlingen (DE); Gonser, Michael, 72461 Albstadt (DE); Schwarz, Jürgen, 72379 Hechingen (DE)
(74) Vertreter: Hering, Hartmut

(57) **Zusammenfassung**

Ein Lenkantriebssystem, vorzugsweise für Flurförderzeuge, weist eine Lenkvorrichtung (130) und wenigstens eine Lenkantriebseinheit (10) auf. Eine Aktivierung der Lenkantriebseinheit (20) erfolgt mittels der Lenkvorrichtung (130) und die Lenkantriebseinheit (10) weist einen Motor (20) auf, der bei seiner Aktivierung über eine Antriebswelle (50) ein Stellrad antreibt. Insbesondere ist der Motor (20) ein bürstenloser Elektromotor/Radnabenmotor mit Permanentmagneten.

## Beschreibung

Die Erfindung betrifft allgemein ein Lenkantriebssystem, vorzugsweise für Flurförderzeuge, das eine Lenkvorrichtung und wenigstens eine Lenkantriebseinheit aufweist, wobei eine Aktivierung der Lenkantriebseinheit mittels der Lenkvorrichtung erfolgt und wobei die Lenkantriebseinheit einen Motor aufweist, der bei seiner Aktivierung über eine Antriebswelle ein Stellrad antreibt.

Aus dem deutschen Gebrauchsmuster DE 20 2005 020 618 U1 ist beispielsweise ein Flurförderfahrzeug bekannt, das mindestens zwei elektrische Antriebe und eine Steuerung für die elektrischen Antriebe hat.

Das deutsche Gebrauchsmuster DE 20 2005 020 634 U1 zeigt ein elektrisches Antriebssystem für Flurförderzeuge mit zumindest einem elektrischen Fahrmotor und/oder einem elektrischen Lenkmotor und einer jeweils zugehörigen Steuerelektronik.

Die deutsche Patentanmeldung DE 101 13 775 A1 zeigt einen Lenkantrieb mit einem Lenkmotor und einem nachgeschaltetem Lenkgetriebe, das als Exzentergetriebe ausgebildet ist.

Die deutsche Patentanmeldung DE 199 11 458 A1 zeigt einen Lenkantrieb für Flurförderzeuge mit einem Lenkmotor mit nachgeschaltetem Lenkgetriebe. Dabei ist zur Reduzierung des Platzbedarfs der Lenkantrieb direkt mit dem Radantrieb verbunden und eine Schwenklagerung vorgesehen, die zwischen dem Lenkmotor und dem Radantrieb angeordnet ist. Der Lenkmotor ist dabei bevorzugt als elektrischer Scheibenläufermotor ausgebildet und das Lenkgetriebe als Planetengetriebe.

Das deutsche Patent DE 196 25 350 C2 zeigt eine elektrisch betreibbare Lenkvorrichtung für ein Fahrzeug, insbesondere ein Flurförderzeug, wobei ein Lenkmotor zur Verstellung eines zu lenkenden Rads als Drehstrom-Asynchronmotor ausgebildet ist. Der Motor wird aus einer Gleichstrom liefernden Stromquelle gespeist, wobei der Drehstrom durch einen Wechselrichter erzeugt wird.

Nach dem Stand der Technik wird bei einem elektrischen Lenkantrieb ein dem Lenkmotor nachgeschaltetes Lenkgetriebe dafür benötigt, ein kleines Drehmoment des Motors, das meistens kleiner als 1 Nm ist, auf das gewünschte Drehmoment von etwa 20 bis 50 Nm zu erhöhen. Ein hohes Drehmoment ist nötig, damit ein Lenken selbst bei einem Verhaken eines gelenkten Rads erfolgen kann.

Ein Bediener betätigt eine Lenkvorrichtung, die ein der gewünschten Lenkung entsprechendes Signal an den Motor abgibt. Um ein durch den Motor über das Getriebe und über eine Antriebswelle angetriebenes Stellrad in die gewünschte Stellung zu bringen, muss der Motor dann vor einem Ausführen des eigentlichen Lenkens einige Umdrehungen durchführen, ohne dass ein Lenken erfolgt. Das Lenken erfolgt mit einer gewissen Verzögerung erst dann, wenn das Stellrad die gewünschte Stellung erreicht hat. Eine solche Verzögerung empfindet der Bediener meist als unangenehm.

Es ist somit eine Aufgabe der Erfindung, ein Lenkantriebssystem, insbesondere für Flurförderzeuge, zur Verfügung zu stellen, dessen Bedienung für einen Bediener auf angenehme Weise erfolgen kann.

Diese Aufgabe wird erfindungsgemäß durch das im Anspruch 1 angegebene Lenkantriebssystem gelöst. Die abhängigen Ansprüche 2 bis 16 zeigen spezielle Ausführungsformen des Lenkantriebssystems gemäß Anspruch 1.

Bei dem erfindungsgemäßen Lenkantriebssystem ist der Motor insbesondere ein bürstenloser Elektromotor/Radnabenmotor mit Permanentmagneten. Ein solcher bürstenloser Gleichstrommotor hat ein großes Drehmoment und hat weiterhin folgende Vorteile gegenüber anderen Gleichstrommotoren. Er hat einen besseren Wirkungsgrad, eine kleinere Bauform und, durch den Wegfall von verschleißanfälligen Kohlenbürsten, eine hohe Zuverlässigkeit. Ein weiterer Vorteil eines Radnabenmotors besteht darin, dass er eine niedrige Drehzahl hat.

Erfindungsgemäß ist der Motor vorzugsweise ein BLDC-(Brushless Direct Current)-Motor, ein PMS-(Permament Magnet Synchron)-Motor oder ein EC-(Electronically Commutated)-Motor.

Durch den erfindungsgemäßen Einsatz eines bürstenlosen Elektromotors/Radnabenmotors mit Permanentmagneten in einem Lenkantriebssystem kann ein dem Motor nachgeschaltetes Getriebe entfallen, was zusätzlich zu einem Einsparen an Platz noch den Vorteil hat, dass eine Geräuschemission des gesamten Systems geringer wird. Bei einem direkten Antrieb eines Stellrads durch den Motor wird aufgrund der hohen Dynamik des Motors erreicht, dass der Bediener beim Lenken den Eindruck hat, dass eine direkte Verbindung zwischen der Lenkvorrichtung und dem Stellrad vorhanden ist.

Ist es aufgrund von Platzproblemen im Fahrzeug nicht möglich, eine direkte Verbindung zwischen dem Motor und dem Stellrad über eine Antriebswelle herzustellen, wie beispielsweise dann, wenn über dem Stellrad der Antriebsmotor des Fahrzeugs vorgesehen ist, wird das Stellrad herkömmlich unter Zuhilfenahme einer Getriebevorrichtung, wie beispielsweise einer Kette, eines Riemens, eines Zahnrads oder Kegelrads betätigt, die dem zum Motor gehörenden Getriebe nachgeschaltet ist. Die Getriebevorrichtung kann auch selbst als das zum Motor gehörende Getriebe genutzt werden. Um den Vorteil des erfindungsgemäßen Lenkantriebssystems eines Gefühls eines direkten Lenkantriebs auch im Fall eines aufgrund der Platzverhältnisse erzwungenen Vorsehens einer Getriebevorrichtung zu erhalten, wird gemäß der Erfindung vorzugsweise die Untersetzung der Getriebevorrichtung auf ein Maximum festgelegt. Durch diese Maßnahme hat ein Bediener immer noch den Eindruck einer direkten Lenkung.

Insbesondere weist die Lenkantriebseinheit weiterhin eine Steuer- und Leistungselektronik auf, die zur Stromversorgung und zur Ansteuerung des Motors dient. Diese Steuer- und Leistungselektronik ist vorzugsweise oben oder seitlich am Motor vorgesehen.

Die Lenkantriebseinheit weist insbesondere weiterhin eine Schnittstelle zu beispielsweise Sensoren, Relais und/oder einer übergeordneten Elektronik auf. Über diese Schnittstelle und eine mit dieser in Verbindung stehenden Kommunikationsleitung erfolgt bevorzugt eine Kommunikation zu der übergeordneten Elektronik über eine serielle Übertragung, wie LIN/CAN, Profibus und Interbus, und/oder eine parallele Verdrahtung mit Steuer- und Versorgungsleitung.

Weiterhin kann einem Bediener Rückinformation über die durch den Motor ausgeübte Kraft zugeführt werden. Dies könnte beispielsweise durch einen kleinen Motor in der Lenkvorrichtung realisiert werden, der der Auslenkung entgegenwirkt.

Eine Positionserkennung eines Rotors des Motors erfolgt insbesondere ohne Sensor durch Nutzung der stromabhängigen Induktivität vom Motor oder über einen separaten Positionssensor als Sollwertgeber.

Die Lenkantriebseinheit ist vorzugsweise an einem Fahrzeugrahmen innerhalb eines Fahrzeugs vorgesehen und steht über die Antriebswelle mit dem Stellrad in Verbindung, das außerhalb des Fahrzeugrahmens vorgesehen ist.

Weiterhin wird die Lenkantriebseinheit an ihrer Schnittstelle vorzugsweise mittels einer Batterie mit Energie versorgt wird.

Vorteilhafterweise ist ein gegenüber Wasser dichter Kabelanschluss seitlich oder oben an der Lenkantriebseinheit vorgesehen.

Weiterhin ist die Lenkantriebseinheit vorteilhaft als kompaktes Gehäuse ausgebildet.

Die angegebenen und weitere Merkmale und Einzelheiten der Erfindung werden einem Fachmann auf dem Gebiet aus der folgenden detaillierten Beschreibung und der beigefügten Zeichnung klarer werden, die Merkmale der vorliegenden Erfindung anhand eines Beispiels darstellt und wobei:
- Fig. 1: eine schematische Ansicht einer Lenkantriebseinheit gemäß einer bevorzugten Ausführungsform der Erfindung zeigt;
- Fig. 2: eine schematische Ansicht eines Lenkantriebssystems gemäß einer bevorzugten Ausführungsform der Erfindung zeigt;
- Fig. 3: eine schematische Ansicht eines Lenkantriebssystems gemäß einer weiteren bevorzugten Ausführungsform der Erfindung zeigt; und
- Fig. 4: eine detailliertere schematische Ansicht des Lenkantriebssystems gemäß der bevorzugten Ausführungsform der Erfindung zeigt.

Im Folgenden wird die vorliegende Erfindung anhand bevorzugter Ausführungsformen unter Bezugnahme auf die beigefügte Zeichnung detailliert erklärt.

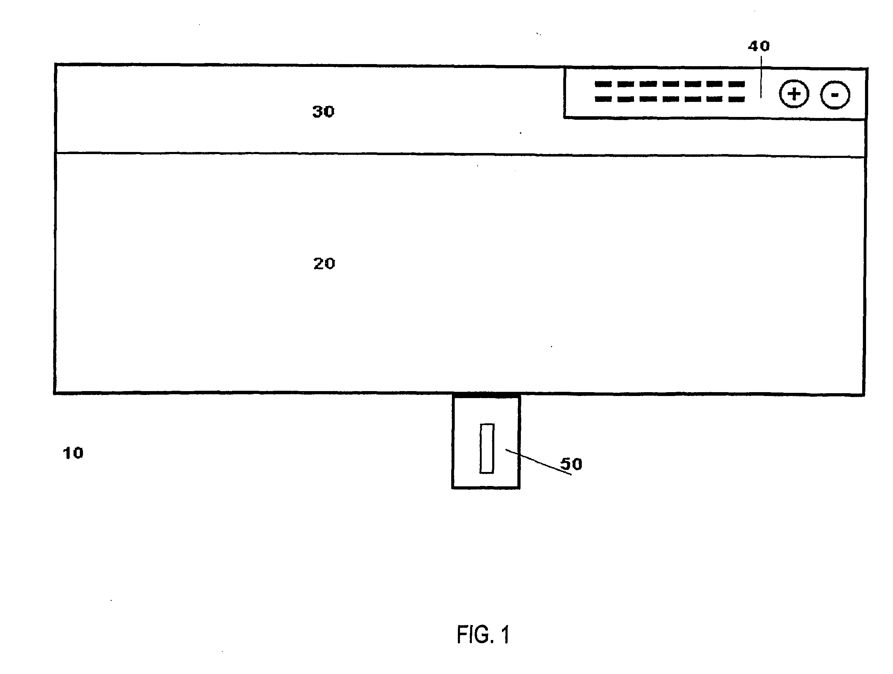

Fig. 1 zeigt eine schematische Ansicht einer erfindungsgemäßen Lenkantriebseinheit 10. Diese Lenkantriebseinheit 10 enthält einen Motor 20, eine Steuer- und Leistungselektronik 30 und eine Schnittstelle 40, wobei der Motor 20 und die Steuer- und Leistungselektronik 30 in kompakter Bauform in einem Gehäuse untergebracht sind.

Die Steuer- und Leistungselektronik 30 ist hier oben am Motor vorgesehen, sie kann aber auch seitlich von ihm vorgesehen sein.

Die Schnittstelle 40 ist eine Schnittstelle zu beispielsweise Sensoren, Relais und/oder einer übergeordneten Elektronik.

Die Lenkantriebseinheit 10 ist Teil eines später detaillierter beschriebenen Systems, das als "steer-by-wire" bekannt ist und in Elektrofahrzeugen Verwendung findet.

Vom Motor 20 in der Lenkantriebseinheit 10 ausgehend ist eine Antriebswelle 50 außerhalb der Lenkantriebseinheit 10 vorgesehen, mittels welcher der Motor 20 ein in Fig. 1 nicht gezeigtes Stellrad antreibt.

Der Motor 20 der Lenkantriebseinheit 10 ist erfindungsgemäß ein bürstenloser Elektromotor/Radnabenmotor mit Permanentmagneten. Vorzugsweise ist der Motor 20 ein BLDC-(Brushless Direct Current)-Motor, ein PMS-(Permament Magnet Synchron)-Motor oder ein EC-(Electronically Commutated)-Motor.

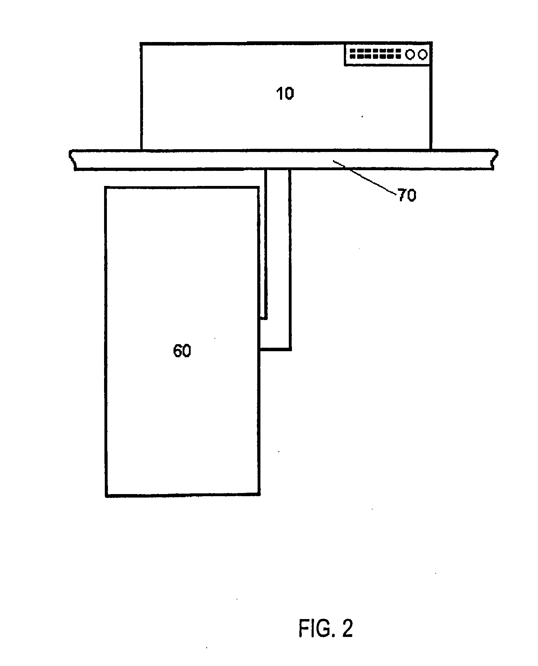

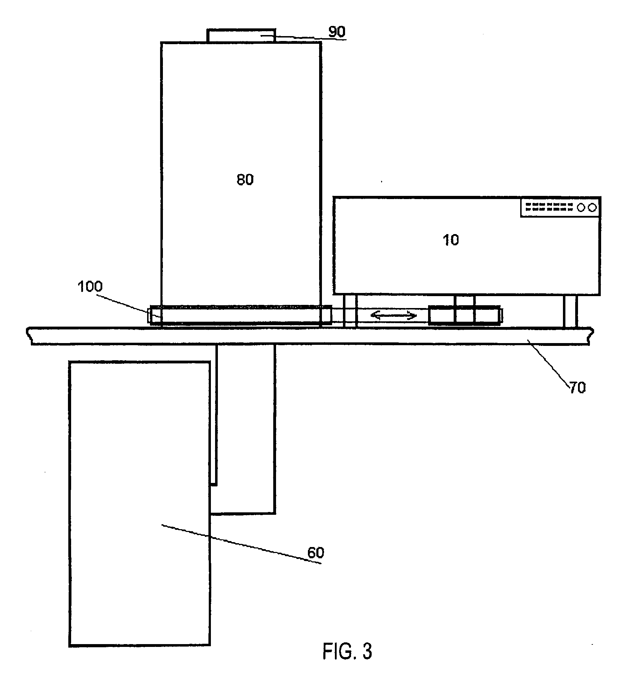

Die in Fig. 1 gezeigte Lenkantriebseinheit 10 kann auf verschiedene Weisen in ein Elektrofahrzeug eingebaut werden, wie es im Folgenden unter Bezugnahme auf die Fig. 2 und 3 beschrieben wird.

Fig. 2 zeigt als erste bevorzugte Ausführungsform der vorliegenden Erfindung einen Einbau der Lenkantriebseinheit 10 in einem Fahrzeug für einen direkten Antrieb eines Stellrads durch den Motor 20. Dabei ist die Lenkantriebseinheit 10 innerhalb eines Fahrzeugs an einem Fahrzeugrahmen 70 angebracht gezeigt, während ein Stellrad 60 außerhalb des Fahrzeugs vorgesehen gezeigt ist. Ein Antrieb des Stellrads 60 erfolgt direkt durch den Motor 20 der Lenkantriebseinheit 10 über die in Fig. 1 genauer gezeigte Antriebswelle 50.

Fig. 3 zeigt als zweite bevorzugte Ausführungsform der vorliegenden Erfindung einen Einbau der Lenkantriebseinheit 10 in einem Fahrzeug für einen indirekten Antrieb eines Stellrads durch den Motor 20. In der Fig. 3 ist, wie es bereits aus der Fig. 2 bekannt ist, die Lenkantriebseinheit 10 innerhalb eines Fahrzeugs an einem Fahrzeugrahmen 70 angebracht gezeigt, während ein Stellrad 60 außerhalb des Fahrzeugs vorgesehen gezeigt ist. Während in Fig. 2 die Lenkantriebseinheit 10 über dem Stellrad 60 vorgesehen ist, ist in der Fig. 3 der Platz über dem Stellrad durch einen Antriebsmotor 80 mit einem zugehörigen Istwertgeber 90 besetzt ist. Daher ist die Lenkantriebseinheit 10 zu dem Stellrad 60 seitlich versetzt neben dem Antriebsmotor 80 am Fahrzeugrahmen 70 angeordnet und kann der Motor 20 der Lenkantriebseinheit 10 das Stellrad 60 nicht mehr direkt über die in Fig. 1 genauer gezeigte Antriebswelle 50 antreiben. Für den Antrieb des Stellrads 60 ist daher eine Getriebevorrichtung 100 vorgesehen, die vorzugsweise eine Kette, ein Riemen, ein Zahnrad oder ein Kegelrad ist. Damit einem Bediener bei diesem indirekten Lenkantrieb das Gefühl eines direkten Lenkantriebs vermittelt werden kann, wird die Untersetzung auf einen maximalen Wert festgesetzt.

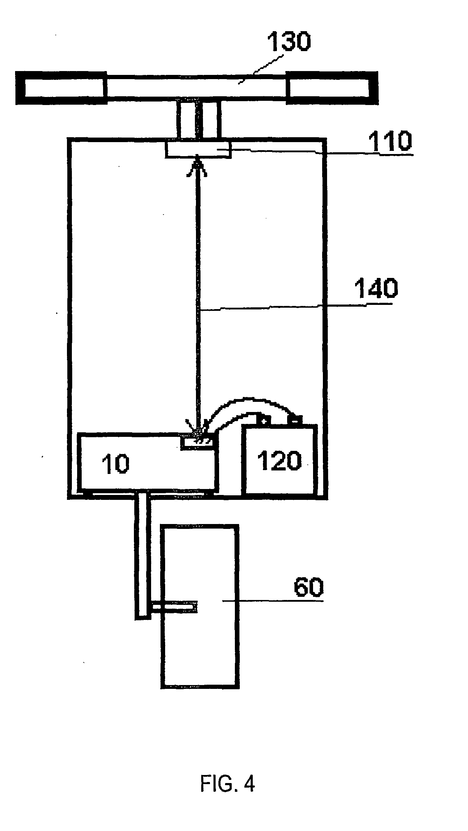

Nachdem vorangehend bevorzugte Ausführungsformen der Erfindung beschrieben worden sind, wird nachfolgend unter Bezugnahme auf die Fig. 4 noch ein gesamtes Lenkantriebssystem detaillierter beschrieben werden.

Die Fig. 4 zeigt ein Lenkantriebssystem mit der Lenkantriebseinheit 10 und dem Stellrad 60, die bereits aus den Fig. 1 bis 3 bekannt sind. Es ist offensichtlich, dass die Fig. 4 die unter Bezugnahme auf die Fig. 2 beschriebene Ausführungsform der vorliegenden Erfindung zeigt, d.h. die Ausführungsform mit einem direkten Antrieb des Stellrads 60 durch den Motor 20 über die Antriebswelle 50. Dies ist jedoch nicht beschränkend für die nachfolgende Beschreibung, die gleichermaßen auch für die in Fig. 3 gezeigte Ausführungsform der Erfindung Gültigkeit hat.

Zusätzlich zu der Lenkantriebseinheit 10 und dem Stellrad 60, die jeweils innerhalb und außerhalb des Fahrzeugs vorgesehen sind, zeigt die Fig. 4 eine Lenkvorrichtung 130, mittels welcher eine Aktivierung des Motors 20 erfolgt, indem ein Bediener die Lenkvorrichtung 130 auf herkömmliche Weise betätigt. Ein durch die Betätigung der Lenkvorrichtung 130 erzeugtes Signal wird über eine paralelle/serielle Kommunikationsleitung 140 über die in Fig. 1 genauer gezeigte Schnittstelle 40 der Lenkantriebseinheit 10 zu der auch in Fig. 1 genauer gezeigten Steuer- und Leistungselektronik 30 zugeführt. Über die Kommunikationsleitung 140 erfolgt insbesondere eine Kommunikation zu der übergeordneten Elektronik über eine serielle Übertragung, wie LIN/CAN, Profibus und Interbus, und/oder eine parallele Verdrahtung mit Steuer- und Versorgungsleitung.

Beim hier gezeigten Fall eines schon vorangehend angesprochenen Systems "steer-by-wire" wird das Signal bei einer Betätigung der Lenkvorrichtung 130 durch eine übergeordnete Elektronik mit Sollwertgeber 110 bei oder in der Lenkvorrichtung 130 erzeugt. Ein Istwertgeber für die Lenkung, der ein Signal zum richtigen Ansteuern des Stellrads an die Steuer- und Leistungselektronik 30 abgibt, befindet sich am Stellrad. Bei dem in Fig. 4 dargestellten direkten Lenkantrieb kann die Radstellung auch durch die Lage des Rotors des Motors 20 erfasst werden.

Weiterhin ist in Fig. 4 neben der Lenkantriebseinheit 10 eine Batterie 120 gezeigt, die mit der Lenkantriebseinheit 10 an deren Schnittstelle 40 angeschlossen ist und sie mit Energie versorgt.

Zusätzlich ist die Lenkantriebseinheit 10 gegen Staub und Wasser geschützt am Fahrzeugrahmen vorgesehen. Ein gegenüber Wasser dichter Kabelanschluss ist bevorzugt seitlich oder oben an der Lenkantriebseinheit 10 vorgesehen.

Es können auch mehrere Lenkantriebseinheiten 10 für ein Fahrzeug eingesetzt werden.

Durch das erfindungsgemäße Lenkantriebssystem kann erreicht werden, dass ein Bediener kein unangenehmes Gefühl hat, das er bei Lenkantriebssystemen nach dem Stand der Technik aufgrund einer verzögert eintretenden Lenkung nach einer Betätigung einer Lenkvorrichtung haben kann. Weiterhin benötigt das erfindungsgemäße Lenkantriebssystem in einem Fahrzug wenig Platz. Es kann in verschiedenen Formen auf flexible Weise eingesetzt werden.

## Patentansprüche

1. Lenkantriebssystem, vorzugsweise für Flurförderzeuge, mit einer Lenkvorrichtung (130) und wenigstens einer Lenkantriebseinheit (10), wobei eine Aktivierung der Lenkantriebseinheit (10) mittels der Lenkvorrichtung (130) erfolgt und wobei die Lenkantriebseinheit (10) einen Motor (20) aufweist, der bei seiner Aktivierung über eine Antriebswelle (50) ein Stellrad (60) antreibt, wobei der Motor (20) ein bürstenloser Elektromotor/Radnabenmotor mit Permanentmagneten ist.

2. Lenkantriebssystem nach Anspruch 1, **dadurch gekennzeichnet, dass** der Motor (20) ein BLDC-(Brushless Direct Current)-Motor, ein PMS-(Permament Magnet Synchron)-Motor oder ein EC-(Electronically Commutated)-Motor ist.

3. Lenkantriebssystem nach Anspruch 1 oder 2, **dadurch gekennzeichnet, dass** der Motor (20) auf seine Aktivierung mittels der Lenkvorrichtung (130) hin das Stellrad (60) direkt antreibt.

4. Lenkantriebssystem nach Anspruch 1 oder 2, **dadurch gekennzeichnet, dass** der Motor (20) auf seine Aktivierung mittels der Lenkvorrichtung (130) hin das Stellrad (60) über eine Getriebevorrichtung (100) indirekt antreibt.

5. Lenkantriebssystem nach Anspruch 4, **dadurch gekennzeichnet, dass** die Getriebevorrichtung (100) eine Kette, einen Riemen, ein Zahnrad oder ein Kegelrad aufweist.

6. Lenkantriebssystem nach Anspruch 4 oder 5, **dadurch gekennzeichnet, dass** für die Getriebevorrichtung (100) eine vorbestimmte maximale Untersetzung eingestellt ist.

7. Lenkantriebssystem nach einem der vorangehenden Ansprüche, **dadurch gekennzeichnet, dass** die Lenkantriebseinheit (10) weiterhin eine Steuer- und Leistungselektronik (30) aufweist, die zur Stromversorgung und zur Ansteuerung des Motors (20) dient.

8. Lenkantriebssystem nach Anspruch 7, **dadurch gekennzeichnet, dass** die Steuer- und Leistungselektronik (30) oben oder seitlich am Motor (20) vorgesehen ist.

9. Lenkantriebssystem nach einem der vorangehenden Ansprüche, **dadurch gekennzeichnet, dass** die Lenkantriebseinheit (10) weiterhin eine Schnittstelle (40) zu beispielsweise Sensoren, Relais und/oder einer übergeordneten Elektronik (110) aufweist.

10. Lenkantriebssystem nach Anspruch 9, **dadurch gekennzeichnet, dass** über die Schnittstelle (40) und eine mit dieser in Verbindung stehenden Kommunikationsleitung (140) eine Kommunikation zu der übergeordneten Elektronik (110) über eine serielle Übertragung, wie LIN/CAN, Profibus und Interbus, und/oder eine parallele Verdrahtung mit Steuer- und Versorgungsleitung erfolgt.

11. Lenkantriebssystem nach einem der vorangehenden Ansprüche, **dadurch gekennzeichnet, dass** einem Bediener Rückinformation über die durch den Motor (20) ausgeübte Kraft zugeführt wird.

12. Lenkantriebssystem nach einem der vorangehenden Ansprüche, **dadurch gekennzeichnet, dass** eine Positionserkennung eines Rotors des Motors (20) ohne Sensor durch Nutzung der stromabhängigen Induktivität vom Motor (20) oder über einen separaten Positionssensor als Sollwertgeber (110) erfolgt.

13. Lenkantriebssystem nach einem der vorangehenden Ansprüche, **dadurch gekennzeichnet, dass** die Lenkantriebseinheit (10) an einem Fahrzeugrahmen (70) innerhalb eines Fahrzeugs vorgesehen ist und über die Antriebswelle (50) mit dem Stellrad (60) in Verbindung steht, das außerhalb des Fahrzeugrahmens (70) vorgesehen ist.

14. Lenkantriebssystem nach einem der Ansprüche 9 bis 13, **dadurch gekennzeichnet, dass** die Lenkantriebseinheit (10) an ihrer Schnittstelle (40) mittels einer Batterie (120) mit Energie versorgt wird.

15. Lenkantriebssystem nach einem der vorangehenden Ansprüche, **dadurch gekennzeichnet, dass** ein gegenüber Wasser dichter Kabelanschluss seitlich oder oben an der Lenkantriebseinheit (10) vorgesehen ist.

16. Lenkantriebssystem nach einem der vorangehenden Ansprüche, **dadurch gekennzeichnet, dass** die Lenkantriebseinheit (10) als kompaktes Gehäuse ausgebildet ist.
